# EUROPEAN PATENT SPECIFICATION

(11) **EP 3 561 293 B1**
(45) Date of publication and mention of the grant of the patent: **20.08.2025**
(21) Application number: 17885435.2
(22) Date of filing: 23.10.2017
(51) Int. Cl.: F03D 7/04, F03D 7/02

(54) **WIND TURBINE VARIABLE-PITCH DEVICE AND WIND TURBINE**
VORRICHTUNG FÜR VARIABLEN ANSTELLWINKEL FÜR WINDTURBINE SOWIE WINDTURBINE
DISPOSITIF À PAS VARIABLE D'ÉOLIENNE ET ÉOLIENNE

(30) Priority: 27.06.2017 CN 201710499398
(43) Date of publication of application: 30.10.2019
(73) Proprietor: Beijing Goldwind Science & Creation Windpower Equipment Co., Ltd., Beijing 100176 (CN)
(72) Inventor: WU, Qinghu, Beijing 100176 (CN); GU, Yaqi, Beijing 100176 (CN)
(74) Representative: Vossius & Partner Patentanwälte Rechtsanwälte mbB
(86) International application number: PCT/CN2017/107263
(87) International publication number: WO 2019/000728

(56) References cited:
- WO-A1-2012/069062
- CN-A- 101 457 744
- CN-A- 102 536 664
- CN-A- 103 953 504
- CN-A- 106 762 438
- CN-U- 201 953 567
- CN-U- 201 953 567
- CN-U- 202 023 694
- CN-U- 203 627 104
- CN-U- 203 847 326
- DE-A1- 102006 012 009
- US-A1- 2011 020 136
- KHEMILI I ET AL: "Dynamic analysis of a flexible slider-crank mechanism with clearance", EUROPEAN JOURNAL OF MECHANICS. A, SOLIDS, GAUTHIER-VILLARS, PARIS, FR, vol. 27, no. 5, 1 September 2008 (2008-09-01), pages 882 - 898, XP022849685, ISSN: 0997-7538, [retrieved on 20071223], DOI: 10.1016/J.EUROMECHSOL.2007.12.004

## Description

### CROSS-REFERENCE TO RELATED APPLICATION

This application claims the priority of Chinese Patent Application No. 201710499398.1, entitled "A WIND TURBINE PITCH DEVICE AND A WIND TURBINE", filed on June 27, 2017.

### TECHNICAL FIELD

The present application relates to the field of wind power generation devices, and in particular to a wind turbine pitch device and a wind turbine.

### BACKGROUND

A wind turbine is a mechanism for converting wind energy into electrical energy, wherein a size of a pitch angle of a blade directly affects the wind energy absorbed by the wind turbine. In operation, the wind turbine needs to constantly adjust the pitch angle of the blade by determining the wind speed, so as to ensure that the wind turbine is in an optimal operating state, wherein the mechanism used to adjust the pitch angle of the blade is a pitch mechanism.

A typical pitch mechanism is a hydraulic pitch mechanism, wherein a hydraulic pressure is used as a power source of the mechanism, and a hydraulic cylinder adjusts the pitch angle of the blade by pushing a driving disk connected with a pitch bearing. One end of the hydraulic cylinder is fixedly mounted on a hub while the other end is mounted on the driving disk. The adjustment of the pitch angle of the blade is achieved through an expansion and contraction of the hydraulic cylinder.

Disadvantages of hydraulic pitch lies in, on the one hand, the filtering and replacement of hydraulic oil increases the maintenance cost of the wind turbine; on the other hand, the low-temperature fluidity of the hydraulic oil is poor, which is not suitable for the wind turbine to operate in a low-temperature environment; and moreover, some issues exist in the hydraulic pitch such as oil leakage of pipelines and joints require special protection for electrical equipment and cables, which increases costs.

CN 203 847 326 U discloses a wind turbine drive device, particularly discloses an electric direct-driven wind turbine pitch device. The electric direct-driven wind turbine pitch device includes a hub, an outer ring of a pitch bearing and an inner ring of the pitch bearing. The outer ring of the pitch bearing is arranged on the hub. The inner ring of the pitch bearing is rotationally fitted with the outer ring of the pitch bearing. The electric direct-driven wind turbine pitch device further includes a linear drive structure and a connecting rod. The two ends of the linear drive structure are fixed to the hub; one end of the connecting rod is hinged to the linear drive structure, and the other end of the connecting rod is hinged to the inner ring of the pitch bearing. Linear motion provided by the linear drive structure is converted into rotation of the inner ring of the pitch bearing through the connecting rod and an installing rack.

### SUMMARY

The subject-matter of the invention is defined by the independent claim. The dependent claims define embodiments.

The present application may provide a wind turbine pitch device and a wind turbine to solve issues in wind turbines of the prior art, for example, high maintenance cost of hydraulic pitch, and oil leakage of hydraulic pipelines.

In one aspect, embodiments of the present application provide a wind turbine pitch device, which is used to control a pitch angle of a blade, the blade is mounted on a hub through a pitch bearing, and the wind turbine pitch device comprises:
a disk driving structure that is fixedly mounted on the blade and perpendicular to an axis of the pitch bearing;
a crank, one end of which is fixedly connected at a position on the disk driving structure corresponding to the axis of the pitch bearing;
a connecting rod, one end of which is hinged to the other end of the crank;
a slider that is hinged to the other end of the connecting rod;
a guide rail that is arranged on the hub and sliding fit with the slider; and
a driving motor that drives the slider to move along the guide rail,
wherein when an outer ring of the pitch bearing is fixedly connected to the blade, the disk driving structure is fixedly mounted on the outer ring of the pitch bearing; and when an inner ring of the pitch bearing is fixedly connected to the blade, the disk driving structure is fixedly mounted on the inner ring of the pitch bearing,
the driving motor is a linear motor, and accordingly, the guide rail is a linear guide rail, and
the linear motor is fixedly mounted on the linear guide rail.

In another aspect, embodiments of the present application may further provide a wind turbine comprising the above described wind turbine pitch device.

The present application may provide a wind turbine pitch device and a wind turbine which may implement a pitching of the wind turbine, the structure may be simple, while it may not be required to drive a pitch system in a hydraulic manner. There may be no leakage and replacement of hydraulic oil, which may reduce a maintenance cost of the wind turbine, and oil-resistant electrical equipment and cables may not be required, thus the adaptability of the wind turbine may be better. Moreover, since a hydraulic control system may be no longer used, there may be no need to replace oil periodically and oil-resistant electrical equipment and cables may not be required, either, a constant low temperature set may be realizable.

### BRIEF DESCRIPTION OF THE DRAWINGS

The present application may be better understood from the following description of specific embodiments of the present application in connection with the accompanying drawings, wherein:

By reading the following detailed description of non-limiting embodiments referring to the accompanying drawings in which the same or similar reference numerals represent the same or similar features, other features, objects and advantages of the present application will become apparent.

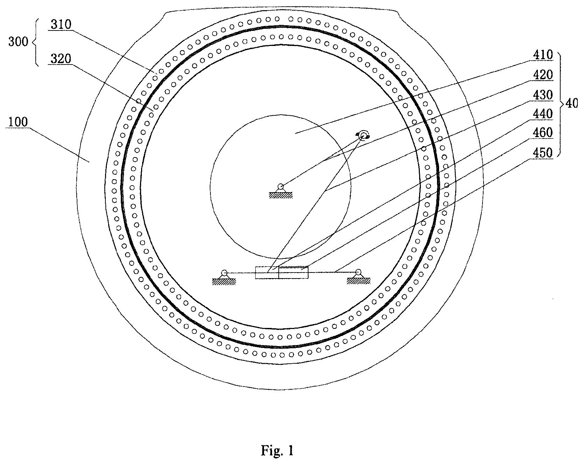

Fig. 1 is a schematic diagram of a wind turbine pitch device provided by embodiments of the present application.

Wherein:
100: a hub;
300: a pitch bearing;
310: an outer ring;
320:an inner ring;
400: a wind turbine pitch device;
410: a disk driving structure;
420: a crank;
430: a connecting rod;
440: a slider;
450: a guide rail;
460: a driving motor.

### DETAILED DESCRIPTION

Features and exemplary embodiments of a variety of aspects of the present application will be described in detail below. In the following detailed description, many specific details are set forth to provide a comprehensive understanding of the present application. However, it is apparent to those skilled in the art that the present application may be practiced without some of these specific details. The following description of embodiments is merely to provide a better understanding of the present application by illustrating examples of the present application. In the accompanying drawings and the following description, well-known structures and techniques are not illustrated as so to avoid unnecessarily obscuring the present application.

Example embodiments will now be described more comprehensively with reference to the accompanying drawings. However, example embodiments may be practiced in various forms and should not be construed as limited to the embodiments set forth herein; rather, these embodiments are provided to make the present application more comprehensive and complete, and fully convey the concepts of the example embodiments to those skilled in the art. In the drawings, the thicknesses of regions and layers may be exaggerated for clarity. The same reference numerals in the drawings present the same or similar structures, thus their detailed description will be omitted.

As shown in Fig. 1, embodiments of the present application may provide a wind turbine pitch device 400 which may be used to control a pitch angle of a blade (not shown), the blade may be mounted on the hub 100 through a pitch bearing 300, and the wind turbine pitch device 400 may comprise a disk driving structure 410, a crank 420, a connecting rod 430, a slider 440, a guide rail 450, and a driving motor 460.

Edges of the disk driving structure 410 may be fixedly mounted on the blade and perpendicular to an axis of the pitch bearing 300; the edges of the disk driving structure 410may be fixed on the blade by means of screwing, welding and riveting, etc., and the disk driving structure 410 may be perpendicular to an axis of the pitch bearing 300so that the disk driving structure 410 may provide a support for the blade. During driving the disk driving structure 410 through the crank 420, the disk driving structure 410 may apply torques to the blade in all directions simultaneously to cause the blade to pitch rotate relative to the hub 100.

One end of the crank 420 may be fixedly connected to the disk driving structure 410so that the crank 420 will not move relative to the disk driving structure 410, thereby the disk driving structure 410 may be better controlled to drive the blade to pitch.

One end of the connecting rod 430 may be hinged to the other end of the crank 420. Through a hinged connection of the connecting rod 430 and the crank 420, the crank 420 may be driven to rotate with the driving of the connecting rod 430. Alternatively, the connecting rod 430 may be partially disposed inside the blade (i.e. a part of the connecting rod 430 may be disposed outside the blade), or may be fully disposed inside the blade.

The slider 440 that may be hinged to the other end of the connecting rod 430. The slider 440, the connecting rod 430 and the crank 420 may constitute a crank-slider structure, so as to drive the crank 420 to rotate by the movement of the slider 440, and in turn, to drive the disk driving structure 410 to cause the blade to pitch rotate.

The guide rail 450 may be arranged on the hub 100 and sliding fit with the slider 440. The guide rail 450 may be used to support the slider 440 and guide the movement of the slider, so that the slider 440 may move along the guide rail 450.

The driving motor 460 may drive the slider 440 to move along the guide rail 450. The driving motor 460 may be used to powering the pitch rotation of the blade, and may be a linear motor to drive directly or a forward-reverse rotating motor to drive through a linear driving mechanism (e.g., a lead screw).

When the wind turbine pitch device 400 is in operation, the slider 440 may be driven by the driving motor 460 to move along the guide rail 450. During the movement of the slider 440 along the guide rail 450, the crank 420 may be driven by the connecting rod 430 to rotate. The fixed connection of the crank 420 and the disk driving structure 410 may enable the crank 420 to drive the disk driving structure 410 to rotate, so as to control the blade to pitch.

Embodiments of the present application may provide a wind turbine pitch device which may implement a pitching of the wind turbine and have a simple structure, while it may not be required to drive a pitch system in a hydraulic manner. There may be no leakage and replacement of hydraulic oil, which may reduce a maintenance cost of the wind turbine, and oil-resistant electrical equipment and cables may not be required, thus the adaptability of the wind turbine may be better. Moreover, since a hydraulic control system may be no longer used, there may be no need to replace oil periodically and oil-resistant electrical equipment and cables may not be required, either, a constant low temperature set may be realizable.

In the wind turbine pitch device 400 provided by embodiments of the present application, the disk driving structure 410may be fixedly mounted on a bearing race fixedly connected to the blade in the pitch bearing 300. The bearing race may be either an outer ring 310 or an inner ring 320 of the pitching bearing 300; through a connection with the pitch bearing 300, the disk driving structure 410 may drive the blade to pitch rotate and provide support for the pitch bearing 300, thereby the operation of the pitch bearing 300 may be more stable.

In the wind turbine pitch device 400 provided by embodiments of the present application, since the connection between the blade and the pitching bear 300 may be implemented in two ways, i.e., through the outer ring 310 or the inner ring 320 of the pitch bearing 300, when the outer ring 310of the pitch bearing 300 is fixedly connected to the blade, the disk driving structure 410 may connected to the outer ring 310 of the pitch bearing 300 accordingly; when the inner ring 320 of the pitch bearing 300 is fixedly connected to the blade, the disk driving structure 410 may be connected to the inner ring 320 of the pitch bearing 300.

In the wind turbine pitch device 400 provided by embodiments of the present application, one end of the crank 420 may be fixedly connected at a position on the disk driving structure 410 corresponding to the axis of the pitch bearing 300,so that the position that the crank 420 drives the disk driving structure 410 may correspond to the axis of the pitch bearing 300.The driving force applied by the disk driving structure 410 to the blade (in particular, the pitch bearing 300 connected to the blade) may be equal, in order to reduce a deformation of the blade (as well as the pitch bearing 300 connected to the blade), thereby the pitch rotation of the blade may be more smooth to prolong the life of the whole pitch baring 300.

In the wind turbine pitch device 400 provided by embodiments of the present application, the driving motor 460 may be a linear motor, and accordingly, the guide rail 450 may be a linear rail, and the two ends of the linear guide rail may be fixedly mounted on the hub 100 to support the slider 440 stably. The linear motor should also be fixed on the hub 100, so that the linear motor may provide a driving force for the slider to enable the slider 440 to drive the crank 420 under a driving of the linear motor.

In the wind turbine pitch device 400 provided by embodiments of the present application, the linear motor may be fixedly mounted on the linear guide rail. The driving direction of the linear motor may be the same as that of the linear guide rail, so that the linear motor may drive the slider 440 along the linear guide rail to provide a greater driving force for the slider.

In the wind turbine pitch device 400 provided by embodiments of the present application, the driving motor 460 may be a forward-reverse rotating motor. The forward-reverse rotating motor may drive a lead screw fitting with the slider 440. The driving motor 460 in this embodiment may be a forward-reverse rotating motor, which differs from the linear motor in that the forward-reverse rotating motor may only provide rotation and cannot drive linearly. To convert the rotation of the forward-reverse rotating motor into a linear driving, it may be required to connect a rotation axis of the forward-reverse rotating motor with the lead screw, and then a rotation of the lead screw may drive the slider 440 on the lead screw to move linearly to complete the pitch driving.

In the wind turbine pitch device 400 provided by embodiments of the present application, the disk driving structure 410 may have a disk shape. Based on the understanding of those skilled in the art, the disk driving structure 410 may have regular disk shape or an irregular disk shape, for example, the edge of the disk may be provided with a convex connection portion uniformly, which may also considered as a disk; the disk may even be provided with several hollow structures to reduce the weight of the disk.

In the wind turbine pitch device 400 provided by embodiments of the present application, the disk driving structure 410 may be provided with reinforcing ribs radially distributed around the center. By providing reinforcing ribs, the disk driving structure 410 may provide a more stable support to improve the deformation resistance of the disk driving structure 410.

In the wind turbine pitch device 400 provided by embodiments of the present application, the disk driving structure 410 may be fixedly connected to the pitch bearing 300 by a bolt. Accordingly, it may be required to process bolt holes on the edge of the disk driving structure 410. By fixedly connecting the disk driving structure 410 to the pitch bearing 300 directly through a bolt, the connection of the disk driving structure 410 and the pitch bearing 300 may be more stable, it may be not required to separately design corresponding connection components for connecting the disk driving structure 410.

Embodiments of the present application may further provide a wind turbine comprising the wind turbine pitch device 400 provided by above embodiments. The wind turbine pitch device 400 may be set for each blade of the wind turbine (generally, three blades may be mounted on the hub of the set), and a corresponding control system may be designed to control the three blades to pitch rotate simultaneously.

Embodiments of the present application may provide a wind turbine pitch device which may implement a pitching of the wind turbine and have a simple structure, while it may not be required to drive a pitch system in a hydraulic manner. There may be no leakage and replacement of hydraulic oil, which may reduce a maintenance cost of the wind turbine, and oil-resistant electrical equipment and cables may not be required, thus the adaptability of the wind turbine may be better. Moreover, since a hydraulic control system may be no longer used, there may be no need to replace oil periodically and oil-resistant electrical equipment and cables may not be required, either, a constant low temperature set may be realizable.

Those skilled in the art will understand that all the above embodiments are exemplary and non-limiting. Different technical features in different embodiments may be combined to achieve beneficial results. Those skilled in the art should be able to understand and implement other varied embodiments of the disclosed ones by studying the drawings, the specification and the claims. The scope of protection sought is defined by the appended claims. Any reference numerical in the claims should not be construed as limiting the scope of protection. Functions of a plurality of parts in the claims may be implemented by a single hardware or software module. The presence of certain technical features in different dependent claims does not imply that these technical features cannot be combined to achieve beneficial results.

## Claims

1. A wind turbine pitch device (400) used to control a pitch angle of a blade, the blade being mounted on a hub (100) through a pitch bearing (300), wherein the wind turbine pitch device (400) comprises:
a disk driving structure (410) that is fixedly mounted on the blade and perpendicular to an axis of the pitch bearing (300);
a crank (420), one end of which is fixedly connected at a position on the disk driving structure (410) corresponding to the axis of the pitch bearing (300);
a connecting rod (430), one end of which is hinged to the other end of the crank (420);
a slider (440) that is hinged to the other end of the connecting rod (430);
a guide rail (450) that is arranged on the hub (100) and sliding fits with the slider (440); and
a driving motor (460) that drives the slider (440) to move along the guide rail (450),
wherein the wind turbine pitch device is **characterized in that**:
when an outer ring (310) of the pitch bearing (300) is fixedly connected to the blade, the disk driving structure (410) is fixedly mounted on the outer ring (310) of the pitch bearing (300); and when an inner ring (320) of the pitch bearing (300) is fixedly connected to the blade, the disk driving structure (410) is fixedly mounted on the inner ring (320) of the pitch bearing (300),
the driving motor (460) is a linear motor, and accordingly, the guide rail (450) is a linear guide rail, and
the linear motor is fixedly mounted on the linear guide rail (450).

2. The wind turbine pitch device (400) of claim 1, wherein the driving motor (460) is a forward-reverse rotating motor that drives a lead screw fitting with the slider (440).

3. The wind turbine pitch device (400) of claim 1 or 2, wherein the disk driving structure (410) has a disk shape.

4. The wind turbine pitch device (400) of claim 3, wherein the disk driving structure (410) is provided with reinforcing ribs radially distributed around a center.

5. The wind turbine pitch device (400) of claim 3, wherein the disk driving structure (410) is fixedly connected to the pitch bearing (300) by a bolt.

6. A wind turbine comprising the wind turbine pitch device (400) of any of claims 1-5.

## Patentansprüche

1. Windturbinen-Anstellwinkelvorrichtung (400) zur Steuerung eines Anstellwinkels eines Blatts, bei der das Blatt über ein Anstellwinkel-Lager (300) an einer Nabe (100) montiert ist, wobei die Windturbinen-Anstellwinkelvorrichtung (400) aufweist:
eine Scheibenantriebsstruktur (410), die fest an dem Blatt montiert ist und senkrecht zu einer Achse des Anstellwinkel-Lagers (300) ist;
eine Kurbel (420), von der ein Ende an einer Position, die der Achse des Anstellwinkel-Lagers (300) entspricht, fest an der Scheibenantriebsstruktur (410) montiert ist;
eine Verbindungsstange (430), von der ein Ende mit dem anderen Ende der Kurbel (420) gelenkig verbunden ist;
einen Schieber (440), der mit dem anderen Ende der Verbindungsstange (430) gelenkig verbunden ist;
eine Führungsschiene (450), die an der Nabe (100) angeordnet ist, wobei der Schieber (440) in gleitendem Eingriff mit der Führungsschiene (450) ist; und
einen Antriebsmotor (460), der den Schieber (440) antreibt, so dass er sich entlang der Führungsschiene (450) bewegt,
wobei die Windturbinen-Anstellwinkelvorrichtung **dadurch gekennzeichnet ist, dass**:
wenn ein Außenring (310) des Anstellwinkel-Lagers (300) fest mit dem Blatt verbunden ist, die Scheibenantriebsstruktur (410) fest an dem Außenring (310) des Anstellwinkel-Lagers (300) montiert ist; und
wenn ein Innenring (320) des Anstellwinkel-Lagers (300) fest mit dem Blatt verbunden ist, die Scheibenantriebsstruktur (410) fest an dem Innenring (320) des Anstellwinkel-Lagers (300) montiert ist,
der Antriebsmotor (460) ein Linearmotor ist und dementsprechend die Führungsschiene (450) eine lineare Führungsschiene ist, und
der Linearmotor fest an der linearen Führungsschiene (450) montiert ist.

2. Windturbinen-Anstellwinkelvorrichtung (400) nach Anspruch 1, wobei der Antriebsmotor (460) ein vorwärts-rückwärts-rotierender Motor ist, der eine Leitspindel antreibt, die in Eingriff mit dem Schieber (440) ist.

3. Windturbinen-Anstellwinkelvorrichtung (400) nach Anspruch 1 oder 2, wobei die Scheibenantriebsstruktur (410) eine Scheibenform hat.

4. Windturbinen-Anstellwinkelvorrichtung (400) nach Anspruch 3, wobei die Scheibenantriebsstruktur (410) mit Verstärkungsrippen, die radial um ein Zentrum verteilt sind, versehen ist.

5. Windturbinen-Anstellwinkelvorrichtung (400) nach Anspruch 3, wobei die Scheibenantriebsstruktur (410) mittels eines Bolzens fest mit dem Anstellwinkel-Lager (300) verbunden ist.

6. Windturbine, aufweisend die Windturbinen-Anstellwinkelvorrichtung (400) nach einem der Ansprüche 1 bis 5.

## Revendications

1. Dispositif de pas d'éolienne (400) utilisé pour contrôler un angle de calage d'une pale, la pale étant montée sur un moyeu (100) par le biais d'une articulation de pas (300), dans lequel le dispositif de pas d'éolienne (400) comprend :
une structure d'entraînement de disque (410) qui est fixement montée sur la pale et perpendiculaire à un axe de l'articulation de pas (300) ;
une manivelle (420), dont une extrémité est fixement raccordée dans une position, sur la structure d'entraînement de disque (410) correspondant à l'axe de l'articulation de pas (300) ;
une tige de raccordement (430), dont une extrémité est articulée à l'autre extrémité de la manivelle (420) ;
un coulisseau (440) qui est articulé à l'autre extrémité de la tige de raccordement (430) ;
un rail de guidage (450) qui est agencé sur le moyeu (100) et s'ajuste par coulissement avec le coulisseau (440) ; et
un moteur d'entraînement (460) qui entraîne le coulisseau (440) pour se déplacer le long du rail de guidage (450),
dans lequel le dispositif de pas d'éolienne est **caractérisé en ce que** :
lorsqu'une bague externe (310) de l'articulation de pas (300) est fixement raccordée à la pale, la structure d'entraînement de disque (410) est fixement montée sur la bague externe (310) de l'articulation de pas (300) ; et lorsqu'une bague interne (320) de l'articulation de pas (300) est fixement raccordée à la pale, la structure d'entraînement de disque (410) est fixement montée sur la bague interne (320) de l'articulation de pas (300),
le moteur d'entraînement (460) est un moteur linéaire, et par conséquent, le rail de guidage (450) est un rail de guidage linéaire, et
le moteur linéaire est fixement monté sur le rail de guidage linéaire (450).

2. Dispositif de pas d'éolienne (400) selon la revendication 1, dans lequel le moteur d'entraînement (460) est un moteur à rotation avant-arrière qui entraîne une vis mère qui s'ajuste avec le coulisseau (440).

3. Dispositif de pas d'éolienne (400) selon la revendication 1 ou 2, dans lequel la structure d'entraînement de disque (410) a une forme de disque.

4. Dispositif de pas d'éolienne (400) selon la revendication 3, dans lequel la structure d'entraînement de disque (410) est prévue avec des nervures de renforcement réparties de manière radiale autour d'un centre.

5. Dispositif de pas d'éolienne (400) selon la revendication 3, dans lequel la structure d'entraînement de disque (410) est fixement raccordée à l'articulation de pas (300) par un boulon.

6. Éolienne comprenant le dispositif de pas d'éolienne (400) selon l'une quelconque des revendications 1 à 5.
